# EUROPEAN PATENT SPECIFICATION

(11) **EP 1 512 847 B1**
(45) Date of publication and mention of the grant of the patent: **13.06.2007**
(21) Application number: 04020933.0
(22) Date of filing: 02.09.2004
(51) Int. Cl.: F01N 3/025, F01N 3/20, F02D 41/02, F01N 9/00

(54) **Exhaust emission control apparatus for internal combustion engine and exhaust emission control method**
Abgaskontrollvorrichtung für Brennkraftmaschine und Abgaskontrollverfahren
Appareil de régulation des émissions de l'échappement pour un moteur à combustion interne et procédé de régulation des émissions de l'échappement

(30) Priority: 04.09.2003 JP 2003312432
(43) Date of publication of application: 09.03.2005
(73) Proprietor: Toyota Jidosha Kabushiki Kaisha, Toyota-shi, Aichi-ken, 471-8571 (JP)
(72) Inventor: Kanazawa, Shogo, Toyota-shi, Aichi-ken, 471-8571 (JP); Sugiyama, Tatsumasa, Toyota-shi, Aichi-ken, 471-8571 (JP); Kobayashi, Nobuki, Toyota-shi, Aichi-ken, 471-8571 (JP); Tahara, Jun, Toyota-shi, Aichi-ken, 471-8571 (JP); Yasunishi, Syunsuke, Toyota-shi, Aichi-ken, 471-8571 (JP); Narita, Morio, Toyota-shi, Aichi-ken, 471-8571 (JP); Miyazaki, Masataka, Toyota-shi, Aichi-ken, 471-8571 (JP)
(74) Representative: TBK-Patent

(56) References cited:
- US-A1- 2002 029 564
- PATENT ABSTRACTS OF JAPAN vol. 013, no. 161 (M-815), 18 April 1989 (1989-04-18) & JP 64 000311 A (MITSUBISHI MOTORS CORP), 5 January 1989 (1989-01-05)
- PATENT ABSTRACTS OF JAPAN vol. 009, no. 300 (M-433), 27 November 1985 (1985-11-27) & JP 60 138221 A (HITACHI SEISAKUSHO KK), 22 July 1985 (1985-07-22)

## Description

### BACKGROUND OF THE INVENTION

### 1. Field of Invention

The invention relates to exhaust emission control apparatus and method for an internal combustion engine in which an additive is injected through an addition valve having an injection hole communicated with an exhaust passage so as to be added to the exhaust gas. More particularly, the invention relates to an improvement of a control structure with respect to addition of the additive through the addition valve so as to avoid clogging therein.

### 2. Description of Related Art

Various types of the exhaust emission control devices employed in the internal combustion engine have been well known as including an addition valve having an injection hole communicated with the exhaust passage such that the additive is injected through the addition valve and added to the exhaust gas.

Document JP-A-2001-280125, for example, discloses an exhaust emission control device for a diesel engine, which includes an addition valve through which the fuel as the additive is injected to the exhaust gas. In the exhaust emission control device, the fuel is directly supplied to a catalyst provided downstream of the addition valve by adding the fuel to the exhaust gas through the addition valve. The exhaust emission control device is structured to add the fuel when needed such that the temperature of the catalyst is increased, or particulate matter (hereinafter referred to as PM), nitrogen oxide (NOx), sulfur (S) and the like that have been trapped and absorbed in the catalyst are purified.

In the exhaust emission control device for the internal combustion engine, which includes the aforementioned addition valve in the exhaust system, there is a case where the additive partially leaks out of the addition valve as the interval for injecting the additive through the addition valve becomes longer. In the aforementioned case, the smoke generated in the exhaust gas may intrude into the addition valve through the injection hole communicated with the exhaust passage and deposit therein . The thus deposited smoke may cause clogging of the injection hole in the addition valve. This may cause various drawbacks such as deterioration in the control accuracy with respect to the amount of added additive and failure in the operation of the addition valve, which prevents supply of the additive into the exhaust gas.

An exhaust emission control apparatus and method comprising the features summarized in the preambles of claims 1 and 5, respectively, are known from document US 2002/0029564 A1.

The predicting means of the known exhaust emission control apparatus predicts an acceleration state on the basis of the operation state of the internal combustion engine and thereby predicts a state where a large amount of smoke is generated in the exhaust gas. If the acceleration state is determined, the forced fuel addition means constituted by an electronic control unit forcedly performs addition of the additive to the exhaust gas through the addition valve. The known exhaust emission control apparatus is confronted with the following problem: Immediately after ejecting the fuel through the addition valve, the injection hole and the region upstream thereof are filled with fuel which thereafter partially leaks out of the addition valve. This results in that the smoke generated in the exhaust gas may intrude into the addition valve through the injection hole communicated with the exhaust passage and deposit therein. The thus deposited smoke may cause clogging of the injection hole. This problem can partly be solved by forcedly injecting the fuel through the addition valve when the acceleration state, where the large amount of smoke is generated, is predicted, so that the addition valve is filled with the fuel and the smoke generated in a large amount cannot intrude into the addition valve. However, the problem of clogging in the addition valve does not only arise when a large amount of smoke is generated in an acceleration state. Small amounts of smoke are generated in the exhaust gas even at steady state operation conditions. These small amounts of smoke may gradually intrude into the addition valve and cause the clogging of the addition valve after an elongated period of time.

It is an object of the present invention to provide an exhaust emission control apparatus and an exhaust emission control method for an internal combustion engine by means of which the clogging in the addition valve owing to the gradual intrusion of smoke can be prevented.

According to the invention, this object is achieved by the exhaust emission control device defined in claim 1 and by the exhaust emission control method defined in claim 5.

Advantageous developments of the invention according to claims 1 and 5 are defined in the dependent claims.

In the exhaust emission control apparatus and method according to the invention, the predicting means predicts that a large amount of smoke in the exhaust gas is generated on the basis of the operation state of the engine. If the generation of a large amount of smoke is predicted, the additive is forcedly added to the exhaust gas from the addition valve. More specifically, when generation of a large amount of smoke is predicted, the additive is added to the exhaust gas through the addition valve irrespective of the predetermined timing for adding the additive. The aforementioned forced addition of the additive may fill the addition valve in which the additive partially leaks with the additive again. Accordingly the addition valve is filled with the additive upon generation of smoke, thus preventing intrusion of the smoke into the addition valve. The aforementioned structure makes it possible to prevent clogging in the addition valve owing to intrusion of the smoke.

The amount of the generated smoke is likely to be increased upon acceleration of the internal combustion engine. If the forced addition of the additive is carried out upon detection of the acceleration state of the engine, the clogging in the addition valve owing to intrusion of the smoke may be prevented. The acceleration state of the engine may be detected based on the change in the engine speed, operation amount of the accelerator pedal, vehicle speed and the like.

In the internal combustion engine where the combustion state is changed by selecting the combustion mode, the combustion state tends to be deteriorated upon change of the combustion mode, resulting in increase in the smoke generation amount. If the forced addition of the additive is carried out upon selection of the combustion mode, the clogging in the addition valve owing to intrusion of the smoke may be prevented.

In the case other than generation of a large amount of smoke upon acceleration or selection of the combustion mode, a small amount of smoke may be generated in the exhaust gas. If the state where the additive partially leaks from the addition valve is left to stand for an elongated time, the smoke may gradually intrude into the addition valve, thus causing clogging therein. In the invention, the total value of smoke generated obtained since the previous addition of the additive through the addition valve is calculated on the basis of the operating state of the engine. When the total value reaches the value equal to or greater than a predetermined value, the forced addition of the additive is carried out such that the addition valve is filled with the additive. This makes it possible to prevent the clogging caused by gradual intrusion of the smoke.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
Fig. 1 is a schematic view showing an exhaust emission control apparatus for an internal combustion engine as an embodiment of the invention;
Fig. 2 is a sectional view showing a structure of an addition valve and its peripheral parts as the embodiment;
Fig. 3 is an enlarged sectional view of a distal end of the addition valve;
Figs. 4A to 4D are views each showing how the clogging occurs in the addition valve;
Fig. 5 is a graph showing a relationship between an air/fuel ratio and a generation amount of smoke;
Fig. 6 is a flowchart showing a clogging prevention control routine according to the embodiment; and
Fig. 7 is a timing chart showing an example of the clogging prevention control routine according to the embodiment.

### DETAILED DESCRIPTION OF PREFERRED EMBODIMENTS

An embodiment of a control apparatus for adding fuel as an additive into the exhaust gas according to the invention will be described referring to the drawings.

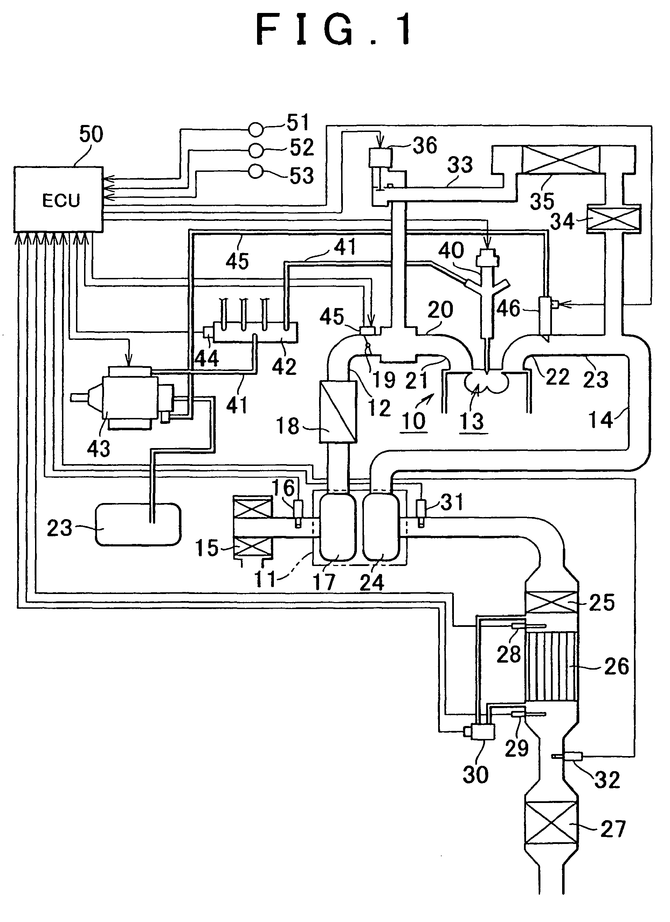

Fig. 1 is a schematic view showing a structure of an internal combustion engine 10 to which the invention is applied. The internal combustion engine 10 is a diesel engine provided with a common rail type fuel injection device and a turbocharger 11 as well as an intake passage 12, a combustion chamber 13 and an exhaust passage 14.

There are an airflow meter 16, a compressor 17 of the turbocharger 11, an intercooler 18, and an intake throttle valve 19 in the intake air passage 12 from an air cleaner 15 at the most upstream side to downstream of the intake air passage 12. The intake passage 12 is branched at an intake manifold 20 downstream of the intake throttle valve 19. Each of the branched intake passage 12 is connected to the corresponding combustion chamber 13 of the respective cylinders of the internal combustion engine 10 via an intake port 21.

Each of exhaust ports 22 connected to the corresponding combustion chamber 13 of the cylinders is connected to an exhaust turbine 24 of the turbocharger 11 via an exhaust manifold 23 in the exhaust passage 14 that constitutes an exhaust system in the internal combustion engine 10. There are an NOx catalytic converter 25, a PM filter 26, and an oxidation catalytic converter 27 disposed downstream of the exhaust turbine 24 in the exhaust passage 14 from the upstream side.

The NOx catalytic converter 25 carries an absorbing/reducing type NOx catalyst. The NOx catalyst has a function in absorbing NOx within the exhaust gas at a high oxygen concentration, and in releasing the absorbed NOx at a low oxygen concentration in the exhaust gas. In the presence of sufficient amount of unburned fuel upon release of the NOx, the NOx catalyst serves to reduce the released NOx so as to be purified.

The PM filter 26 is formed of a porous material such that the particulate matter (hereinafter referred to as PM) is trapped. Like the NOx catalytic converter 25, the PM filter 26 carries the absorbing/reducing type NOx catalyst such that the NOx contained in the exhaust gas is purified. The reaction caused by the NOx catalyst oxidizes the trapped PM so as to be removed.

The oxidation catalytic converter 27 carries the oxidation catalyst so as to oxidize and remove HC, CO and the like contained in the exhaust gas.

An inflow gas temperature sensor 28 for detecting a temperature of inflow gas, that is, the exhaust gas that flows into the PM filter 26 and an outflow gas temperature sensor 29 for detecting a temperature of outflow gas, that is, the exhaust gas that passes through the PM filter 26 are disposed upstream and downstream of the PM filter 26, respectively in the exhaust passage 14. A differential pressure sensor 30 for detecting a differential pressure between the upstream side and the downstream side of the PM filter 26 in the exhaust passage 14. Two oxygen sensors 31, 32 for detecting the respective oxygen concentrations in the exhaust gas are disposed in the exhaust passage 14, the one oxygen sensor 31 being disposed downstream of the exhaust turbine 24, and the other oxygen sensor 32 being disposed between the PM filter 26 and the oxidation catalytic converter 27.

The internal combustion engine 10 is further provided with an exhaust recirculation (hereinafter referred to as EGR) device for recirculating a part of the exhaust gas into air within the intake passage 12. The EGR device includes an EGR passage 33 that communicates the exhaust passage 14 with the intake passage 12. The most upstream portion of the EGR passage 33 is connected to the upstream side of the exhaust turbine 24 in the exhaust passage 14. There are an EGR catalyst 34 that reforms the recirculated exhaust gas, an EGR cooler 35 that cools the exhaust gas, and an EGR valve 36 that adjusts a flow rate of the exhaust gas provided in the EGR passage 33 from the upstream side thereof. The most downstream portion of the EGR passage 33 is connected to the downstream side of the intake throttle valve 19 in the intake passage 12.

An electronic control unit (hereinafter referred to as ECU) 50 that executes various control routines in the internal combustion engine 10 includes a CPU that executes various operations that relate to the control in the internal combustion engine 10, a ROM that stores programs and data required for executing the control routines, a RAM that temporarily stores the results of operation executed by the CPU, an input/output port for inputting/outputting signals from/to the outside, and the like. The input port of the ECU 50 is connected to an NE sensor 51 that detects an engine speed, an accelerator sensor 52 that detects an operation amount of the accelerator pedal, a throttle valve sensor 53 that detects an opening degree of the intake throttle valve 19 in addition to the various sensors as described above. The output port of the ECU 50 is connected to the drive circuit for the intake throttle valve 19 and the EGR valve 36.

The ECU 50 serves to output a command signal to the drive circuit for the respective units each connected to the output port in accordance with the engine operation state indicated by the detected signal transmitted from the respective sensors. Various control routines, for example, for controlling the opening degree of the intake throttle valve 19, and for EGR controlling based on the control of the opening degree of the EGR valve 36, are executed by the ECU 50.

In the internal combustion engine 10 according to the embodiment, the combustion mode is selected between the normal combustion mode and the low temperature combustion mode as a part of the control as described above. Under the low temperature combustion mode, a large quantity of EGR is admitted so as to slow down the combustion of the mixture within the combustion chamber 13, thus reducing generation of both NOx and smoke. Under the low temperature combustion mode, the aforementioned admission of a large amount of EGR allows the combustion of the mixture at relatively rich air/fuel ratio compared with the normal combustion mode.

The combustion chamber 13 for each of the cylinders in the internal combustion engine 10 includes a fuel injection valve 40 for injecting fuel so as to be burned within the combustion chamber 13. The fuel injection valve 40 is connected to a common rail 42 via a high pressure fuel supply pipe 41. The high pressure fuel is supplied into the common rail 42 via a fuel pump 43. The pressure of the high pressure fuel within the common rail 42 is detected by a rail pressure sensor 44 provided on the common rail 42. The low pressure fuel is supplied from the fuel pump 43 into an addition valve 46 via a low pressure fuel supply pipe 45.

The drive circuit for the fuel injection valve 40, the fuel pump 43, and the addition valve 46 is connected to the output port of the ECU 50 which serves to execute control with respect to the amount of fuel injected through the fuel injection valve 40, the fuel injection timing, the fuel injection pressure, the addition of the fuel through the addition valve 46 and the like.

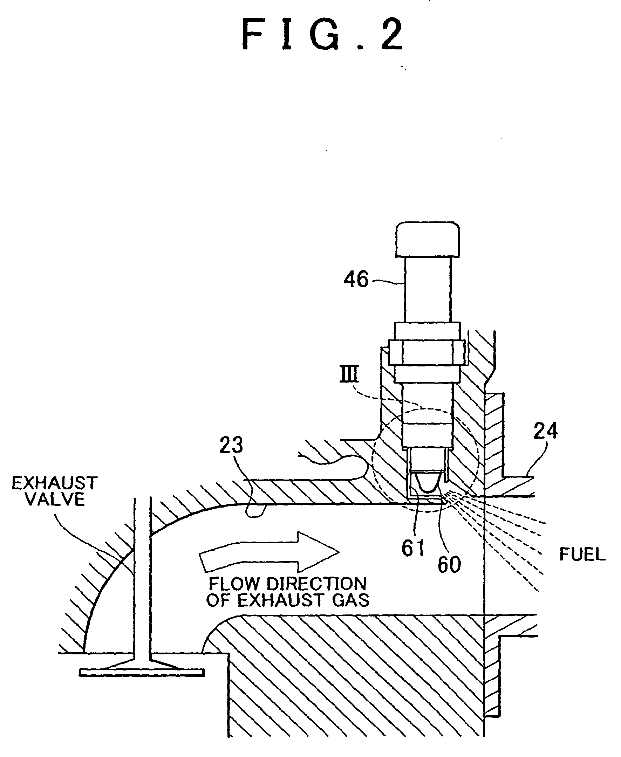

Fig. 2 is a cross sectional view of the exhaust port 22 provided with the addition valve 46 and peripheral parts thereof.

Referring to Fig. 2, the addition valve 46 is disposed around the portion at which the exhaust port 22 of the cylinder and the corresponding exhaust manifold 23 are connected. An injection hole 60 is formed in the distal end of the addition valve 46 such that the fuel is injected through the injection hole 60 toward the exhaust manifold 23, and added to the exhaust gas.

The distal end of the addition valve 46 having the injection hole 60 is provided with a protection cover 61 having an opening to be communicated with the exhaust manifold 23 in the fuel injection direction. The protection cover 61 serves to prevent the increase in the temperature of the addition valve 46 under the heat of the exhaust gas.

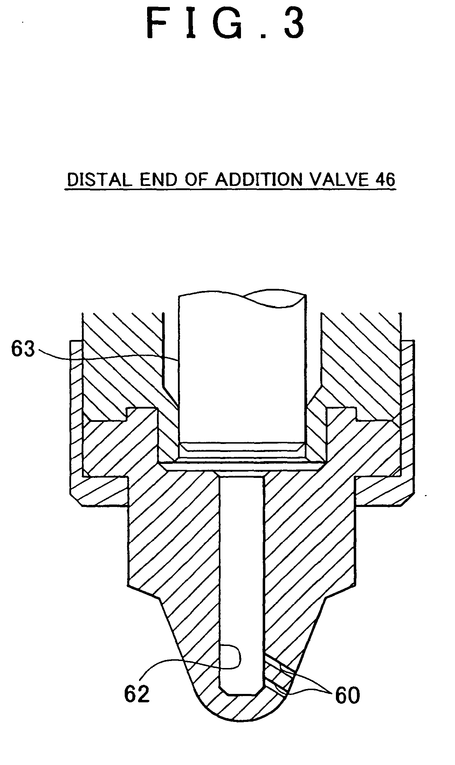

Fig. 3 is a sectional view of the distal end of the addition valve 46 as a part surrounded with a circle III drawn by a broken line shown in Fig. 2. The injection hole 60 is communicated with a suck chamber 62 formed within the distal end of the addition valve 46. When a needle valve 63 provided in the addition valve 46 is opened, the low pressure fuel supplied from the fuel pump 43 is fed into the suck chamber 62. The low pressure fuel admitted into the suck chamber 62 is then injected through the injection hole 60. Accordingly the fuel as the additive is added to the exhaust gas through the addition valve 46.

When the fuel is added to the exhaust gas through the addition valve 46, the fuel is fed to the NOx catalytic converter 25 or the PM filter 26 together with the exhaust gas. Under the heat generated by the oxidation reaction of the fuel, the bed temperature of the catalyst may be increased, or the NOx or sulfur oxides (SOx) absorbed in the NOx catalyst may be reduced by the fuel serving as the reducing agent.

The control that relates to adding of the fuel to the exhaust gas through the addition valve 46 includes PM reclamation control mode, NOx reducing control mode, S poisoning recovery control mode, and normal control mode.

Under the PM reclamation control mode, the PM trapped by the PM filter is burned so as to be discharged as carbon dioxide (CO₂) and water (H₂O), thus eliminating clogging of the PM filter 26. Under the PM reclamation control mode, the fuel is continuously added through the addition valve 46 to the exhaust gas with repetition such that the added fuel is oxidized in the exhaust gas or on the catalyst. Under the resultant heat caused by the oxidation reaction, the bed temperature of the catalyst is increased to the value in the range between 600 and 700 °C, for example. This may allow the PM to be burned out.

Under the NOx reducing control mode, the NOx absorbed in the NOx catalytic converter 25 and the NOx catalyst of the PM filter 26 is discharged as nitrogen (N₂), carbon dioxide (CO₂), and water (H₂O). Under the NOx reducing control mode, the fuel is intermittently added through the addition valve 46 to the exhaust gas at a predetermined time interval such that the exhaust gas around the NOx catalyst is brought into the atmosphere in which the oxygen concentration is low and the content of unburned fuel is high, that is, the state of rich spike. As a result, this control mode promotes discharge of NOx from the NOx catalyst and NOx reduction so as to reduce NOx through reducing.

Under the S poisoning recovery control mode, the NOx absorbing function which has been deteriorated owing to the sulfur oxides (SOx) absorbed together with the NOx in the NOx catalyst is recovered. Upon start of the S poisoning recovery control mode, like the PM reclamation control, the fuel is continuously added through the addition valve 46 to the exhaust gas such that the bed temperature of the catalyst is increased to the value between 600 to 700 °C, for example. Like the NOx reducing control, the fuel is added intermittently through the addition valve 46 so as to bring the atmosphere into the rich spike state intermittently. As a result, the control mode promotes discharge of SOx from the NOx catalyst and SOx reduction so as to recover the NOx absorbing function. In this embodiment, the control for increasing the bed temperature of the catalyst is continued until the PM trapped in the PM filter 26 is almost completely eliminated. This makes it possible to allow burning of the PM simultaneously with the SOx reduction and to prevent excessive increase in the bed temperature of the catalyst.

Under the mode other than those described above, that is, normal control mode, the fuel is not normally added to the exhaust gas through the addition valve 46.

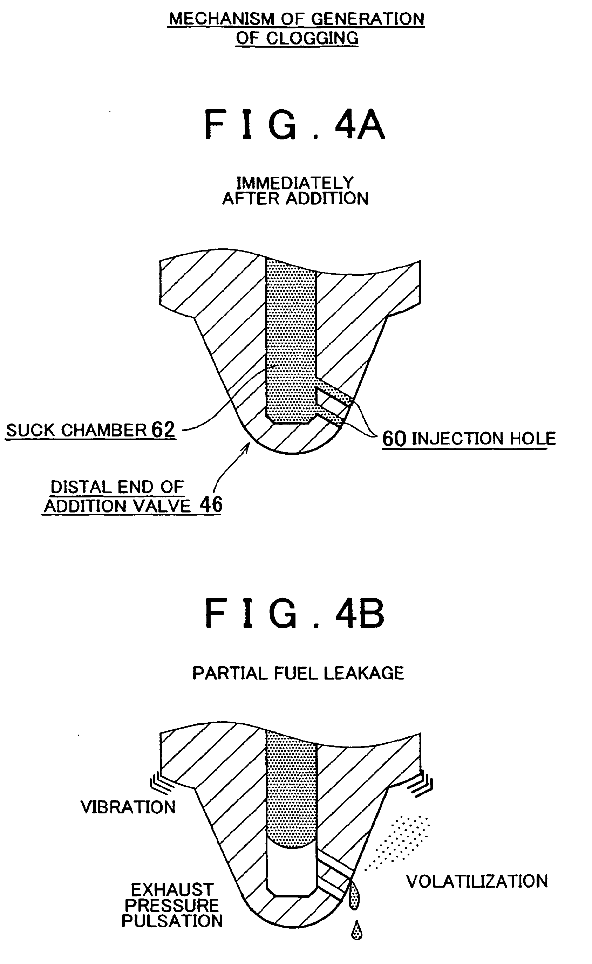

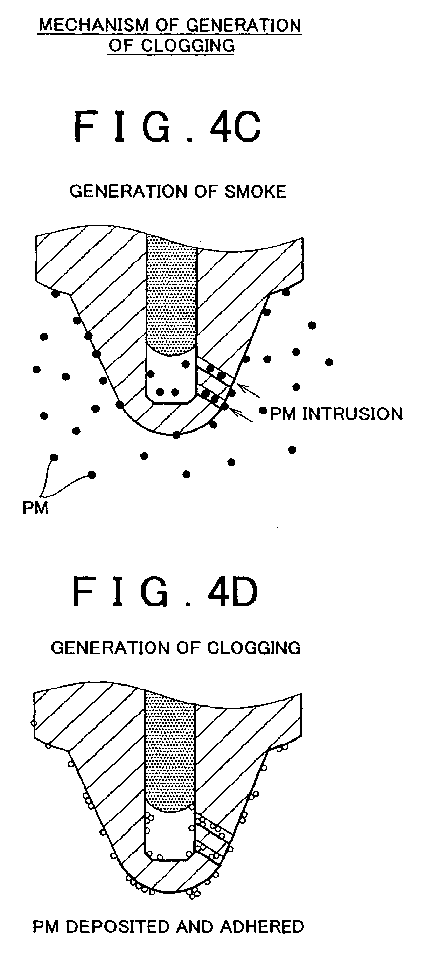

In the exhaust emission control apparatus for the internal combustion engine 10 in which the fuel is injected to the exhaust gas through the addition valve 46 having the injection hole 60 communicated with the exhaust passage 14, the smoke generated within the exhaust gas may intrude into the addition valve 46, and clogging may occur. Fig. 4 shows how clogging occurs in the addition valve 46 in detail.

Immediately after adding the fuel through the addition valve 46, the injection hole 60 and the suck chamber 62 within the addition valve 46 are filled with the fuel as shown in Fig. 4A. In this state, the smoke generated by a large amount cannot intrude into the addition valve 46.

If the addition valve 46 is left to stand for an elongated time from the previous addition of the fuel, the fuel that has been filled in the injection hole 60 and the suck chamber 62 partially leaks owing to vibration of the internal combustion engine 10 or vehicle, temporal decrease in the exhaust pressure caused by exhaust gas pulsation, volatilization of the fuel and the like as shown in Fig. 4B. If a large amount of smoke is generated in the exhaust gas in the aforementioned state, the PM contained in the exhaust gas intrudes into the addition valve 46 via the injection hole 60 as shown in Fig. 4C. If the aforementioned state is further left to stand, the intruded PM is deposited and adhered inside of the addition valve 46 as shown in Fig. 4D. This may cause clogging in the injection hole 60 or the suck chamber 62.

In the exhaust emission control apparatus for the internal combustion engine 10 according to the embodiment, the clogging prevention control is executed so as to prevent the clogging in the addition valve 46 as described below.

Under the clogging prevention control, the ECU 50 serves to predict the state where a large amount of smoke is generated in the exhaust gas based on the engine operation state. It is determined that a large amount of smoke is generated when the internal combustion engine 10 is in the acceleration state and when the combustion mode is selected between the low temperature combustion mode and the normal combustion mode. Based on the aforementioned determination, the prediction is made. Generation of a large amount of smoke under the aforementioned states may be caused by the following reasons.

Upon acceleration of the internal combustion engine 10, the fuel injection amount supplied through the fuel injection valve 40 is increased such that the combustion is performed at an air/fuel ratio of the mixture in relatively a rich state compared with the normal state. A part of the fuel is brought into an incomplete combustion state, thus generating a large amount of smoke within the exhaust gas. The determination as to whether the internal combustion engine 10 is in the acceleration state, that is, acceleration determination may be made by determining whether the rate of increase in the engine speed, fuel injection amount or the vehicle speed becomes equal to or greater than a predetermined value.

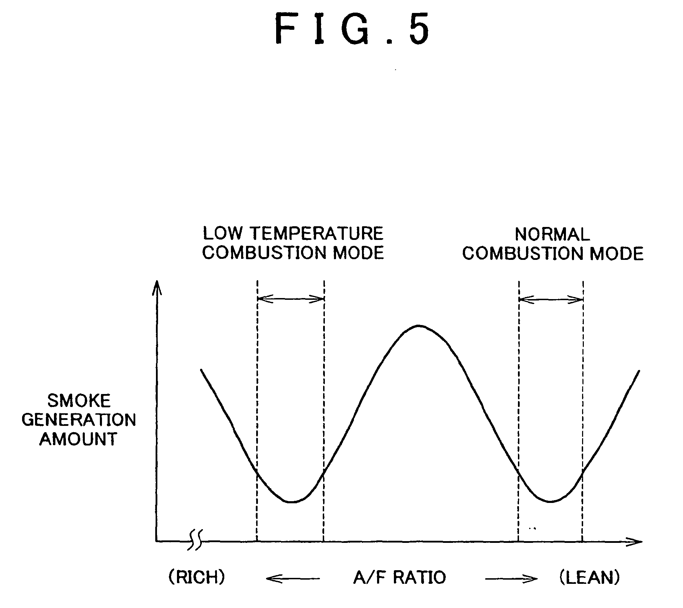

Referring to Fig. 5, both the low temperature combustion mode and the normal combustion mode are performed at the air/fuel ratio sufficient to prevent generation of the smoke. Upon a change between the low temperature combustion mode and the normal combustion mode, the air/fuel ratio temporarily becomes the value that may fail to prevent generation of the smoke. As a result, a large amount of smoke tends to be generated in the exhaust gas upon a change of the combustion mode.

If the ECU 50 predicts the state where a large amount of smoke is generated, the addition of the fuel to the exhaust gas through the addition valve 46 is forcedly executed irrespective of the predetermined timing for adding the fuel. When the addition of the fuel is performed, the injection hole 60 and the suck chamber 62 within the addition valve 46 are filled with the fuel as shown in Fig. 4A, thus preventing intrusion of the smoke generated in the exhaust gas. Even if the smoke intrudes into the addition valve 46, it can be swept away by further adding the fuel. The aforementioned forced adding of the fuel may prevent clogging in the addition valve 46 owing to intrusion of smoke. The amount of the added fuel in the aforementioned case is set to the value as minimum as possible that allows re-filling of the fuel within the addition valve 46 so as not to adversely affect the exhaust emission.

A small amount of smoke is generated in the case other than the acceleration of the internal combustion engine 10 or the change of the combustion mode. Accordingly when the state where the partial fuel leakage from the addition valve 46 is left to stand for an elongated time, the smoke is likely to gradually intrude into the addition valve 46 even if a large amount of smoke is not generated. This may also cause the clogging in the addition valve 46..

In the embodiment, the ECU 50 obtains the total smoke generation amount as the total value of the smoke generation amount in the exhaust gas calculated since the previous addition of the fuel through the addition valve 46, and executes forced fuel addition when the total smoke generation amount becomes equal to or greater than a predetermined amount α. The forced fuel addition may sweep the intruded smoke away and fill the addition valve 46 with the fuel again so as to prevent clogging therein owing to a gradual intrusion of the smoke. The total smoke generation amount is obtained by detecting instantaneous smoke generation amounts based on the engine speed, fuel injection amount and the like, and summing up those calculated values.

In the embodiment, the ECU 50 executes the forced fuel addition under the NOx reducing control mode where the fuel addition is performed at a relatively longer interval, and under the normal control mode where the fuel addition is not normally performed. Under the S poisoning recovery control mode after the bed temperature of the catalyst is sufficiently increased to the high value, the fuel addition is executed for a relatively longer interval such that the rich spike is intermittently performed. In this case, however, the exhaust gas has been already heated at a high temperature, and a large amount of smoke is not generated. Accordingly the forced fuel addition is not executed under the S poisoning recovery control mode.

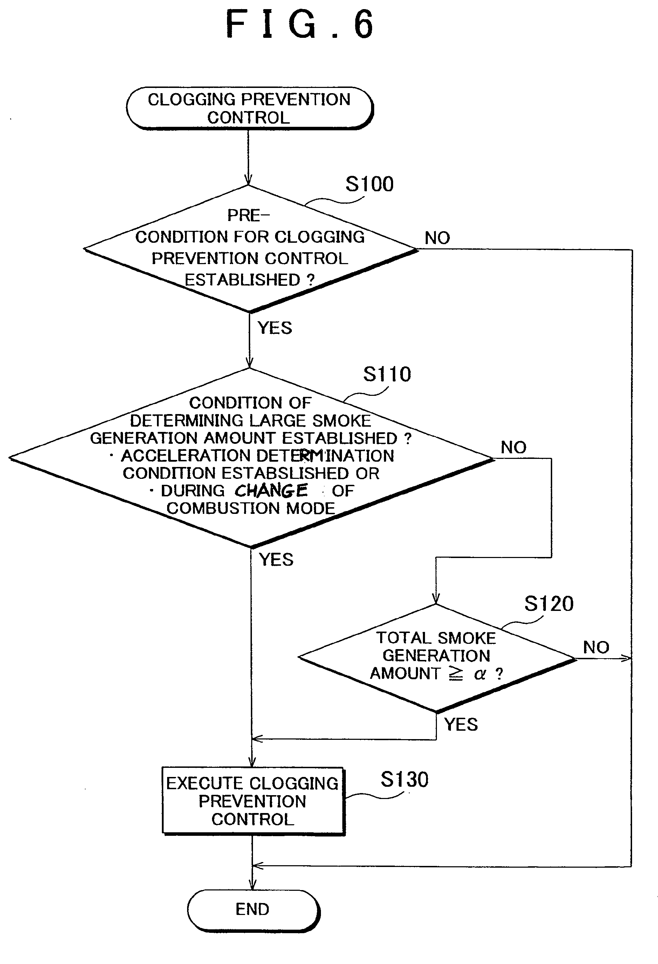

The routine for the clogging prevention control will be described referring to Fig. 6. This routine is executed by the ECU 50 periodically during operation of the engine.

Upon start of the control routine, the ECU 50 determines whether pre-conditions for executing the clogging prevention control have been established in step S100. The establishment of the pre-conditions is determined when one of the conditions (a1) and (a2) is satisfied, and the condition (a3) to be described below is further satisfied.
(a1) The engine is in the normal control mode, and the following three conditions (1) to (3) are all satisfied;
   (1) The bed temperature of the catalyst is equal to or higher than a predetermined value Ta, and lower than a predetermined value Tb. The bed temperature of the catalyst is a value estimated based on the detected value of the outflow gas temperature sensor 29 and the change in the engine operation state (engine speed, fuel injection amount, etc.). The predetermined values Ta and Tb are set as the lower and upper limit values of the bed temperature of the catalyst sufficient to maintain the activated state of the catalyst such that the added fuel is not directly discharged to outside, and to avoid excessive increase in the bed temperature of the catalyst owing to the temperature rise accompanied with the fuel addition to the exhaust gas.
   (2) The exhaust gas temperature is equal to or higher than a predetermined value Tc and lower than a predetermined value Td. The detected value of the inflow gas temperature sensor 28 is used as the exhaust gas temperature. The predetermined values Tc and Td are set as the lower and upper limit values of exhaust gas temperature sufficient to maintain the activated state of the catalyst such that the added fuel is not directly discharged to outside, and to avoid excessive increase in the bed temperature of the catalyst owing to the temperature rise accompanied with the fuel addition to the exhaust gas.
   (3) The engine is in the state other than stall, before completion of determining the cylinder, and during limitation of the accelerator pedal opening degree.
(a2) The engine is under the NOx reducing control mode.
(a3) A predetermined time has elapsed from previous execution of the fuel addition.

If it is determined that the pre-conditions have not been established, that is, NO is obtained in step S100, the ECU 50 ends the control routine. Meanwhile if it is determined that the preconditions have been established, that is, YES is obtained in step S100, the process proceeds to step S110.

In step S 110, the ECU 50 determines whether the condition for predicting the state in which a large amount of smoke is generated in the exhaust gas, that is, the condition for determining smoke generation has been established. The condition for determining smoke generation is established if one of conditions (b1) and (b2) is satisfied. If it is determined that the condition for determining smoke generation has not been established, that is, NO is obtained in step S110, the process proceeds to step S 120. If it is determined that the condition for determining smoke generation has been established, that is, YES is obtained in step S110, the process proceeds to step S130.
(b1) The condition for determining acceleration is satisfied, and the internal combustion engine 10 is in the acceleration state.
(b2) The combustion mode is being changed between the normal combustion mode and the low temperature combustion mode.

In step S120, it is determined whether the total smoke generation amount is equal to or greater than a reference value α. If the total smoke generation value is equal to or greater than the reference value α, that is, YES is obtained in step S120, the process proceeds to step S130. If the total smoke generation value is smaller than the reference value α, that is, NO is obtained in step S120, the ECU 50 ends the control routine.

In step S130, the ECU 50 outputs the command signal with respect to execution of the fuel addition to the addition valve 46 so as to perform the forced fuel addition. The ECU 50 then ends the control routine.

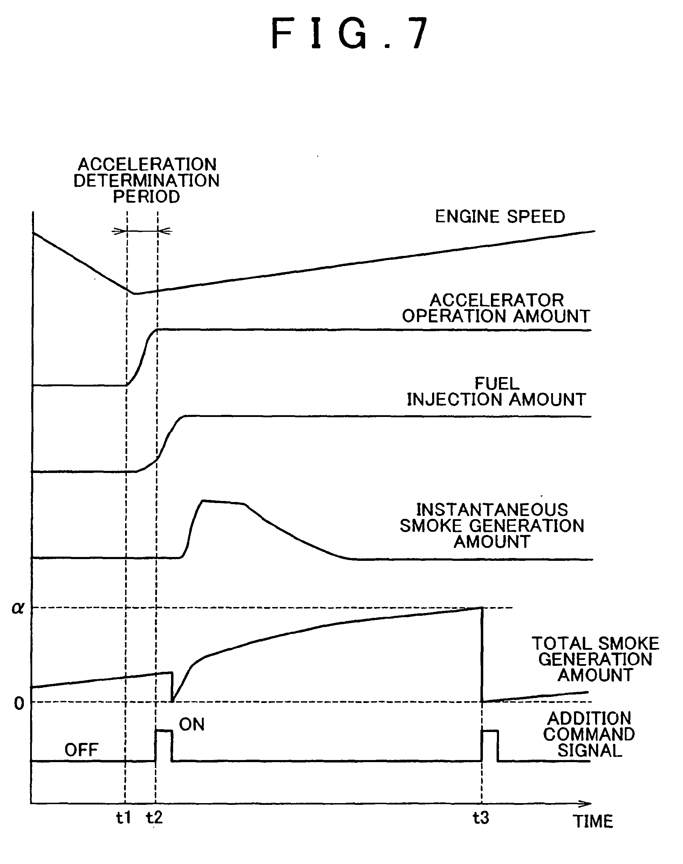

Fig. 7 shows an example of the clogging prevention control as described above.

In the example shown in Fig. 7, acceleration of the internal combustion engine 10 starts at a time point t1 to increase the engine speed, the accelerator operation amount, and the fuel injection amount. The instantaneous smoke generation amount sharply increases accompanied with the acceleration.

At a time point t2, the determination is made with respect to the acceleration. When it is determined that the internal combustion engine 10 is in the acceleration state, the command signal for the fuel addition to the addition valve 46 is issued by the ECU 50 so as to execute the forced fuel addition through the addition valve 46. The addition valve 46 may be filled with the fuel again prior to generation of a large amount of smoke, thus preventing intrusion of the smoke into the addition valve 46.

The total smoke generation amount shown in Fig. 7 is derived as the sum of the instantaneous smoke generation amounts calculated in accordance with the engine operation states. Upon the fuel addition to the addition valve 46, the total smoke generation value is returned to 0. Then such value is increased in accordance with the instantaneous smoke generation amount.

When the total smoke generation amount becomes equal to or greater than a reference value α at a time point t3, the ECU 50 issues the command value for fuel addition so as to execute the forced fuel addition through the addition valve 46. The smoke that has been gradually intruding into the addition valve 46 since the forced fuel addition at the time point t2 is swept away, and the addition valve 46 is filled with the fuel again.

In this embodiment, the process in step S 110 under the clogging prevention control corresponds to the prediction means. The fuel addition performed in step S130 corresponds to the forced fuel addition by the forced fuel addition means. The total smoke generation amount based on which the determination is made in step S120 corresponds to the total value of the smoke generation amount calculated by the calculation means.

The aforementioned embodiment may provide the following effects.
(1) In the embodiment, the state where a large amount of smoke is generated in the exhaust gas is predicted based on the engine operation state. If such state is predicted, the forced fuel addition through the addition valve 46 is performed. The addition valve 46 at a time when such state is predicted is filled with the fuel, thus preventing intrusion of the smoke into the addition valve 46. This makes it possible to prevent clogging in the addition valve 46.
(2) In the embodiment, the forced fuel addition through the addition valve 46 is performed upon determination that the internal combustion engine 10 is in the acceleration state. This makes it possible to prevent clogging in the addition valve 46 owing to a large amount of smoke generated in the exhaust gas accompanied with the acceleration of the internal combustion engine 10.
(3) In the embodiment, the forced fuel addition through the addition valve 46 is performed upon a change of the combustion mode of the internal combustion engine 10. This makes it possible to prevent clogging in the addition valve 46 owing to a large amount of smoke generated in the exhaust gas accompanied with the change of the combustion mode of the internal combustion engine 10.
(4) In the embodiment, when the total smoke generation amount as the total value by summing up the smoke generation amounts obtained since the previous fuel addition becomes equal to or greater than a reference value α, the forced fuel addition is performed such that the addition valve 46 is filled with the fuel. This makes it possible to prevent clogging in the addition valve 46 owing to gradual intrusion of the smoke other than the case where a large amount of smoke is generated.

Any one of the conditions (b1) and (b2) as the condition for determining generation of a large amount of smoke to be made in step S110 under the clogging prevention control may be eliminated. In the case where the invention is applied to an internal combustion engine in which the combustion mode is not changed or the amount of smoke generated upon change of the combustion mode is substantially small, the clogging in the addition valve 46 may be prevented even if the condition (b2) is eliminated. In the case where the invention is applied to an internal combustion engine in which the amount of smoke generated upon acceleration is substantially small, the condition (b1) may be eliminated. A condition that may cause generation of a large amount of smoke other than the conditions (b1) and (b2) may be considered as the condition for determining generation of a large amount of smoke.

In the internal combustion engine 10 to which the embodiment is applied, the forced fuel addition through the addition valve 46 is not executed under the S poisoning recovery control mode and NOx reduction control mode. If there is a possibility of causing clogging in the addition valve 46 under the aforementioned control modes, execution of the forced fuel addition is allowed.

The invention may be applied to the exhaust emission control apparatus for the internal combustion engine with the structure other than that as aforementioned. The clogging in the addition valve may be prevented by the invention so long as the exhaust emission control apparatus for the internal combustion engine is structured such that the additive is injected through the addition valve having the injection hole communicated with the exhaust passage so as to add the additive into the exhaust gas. For example, the invention may be applied to the exhaust emission control apparatus in which the additive other than the fuel such as urea is added to the exhaust gas.

## Claims

1. An exhaust emission control apparatus for an internal combustion engine (10) having an exhaust passage (14) and an addition valve (46) for injecting an additive and adding it to an exhaust gas, the addition valve (46) having an injection hole (60) communicated with the exhaust passage (14),
the exhaust emission control apparatus comprising
predicting means (50) that predicts a state where a large amount of smoke is generated in the exhaust gas on the basis of an operation state of the internal combustion engine (10); and
forced fuel addition means (50) that forcedly performs addition of the additive to the exhaust gas through the addition valve (46) when the predicting means (50) predicts the state where the large amount of smoke is generated,
the exhaust emission control apparatus being **characterized by** further comprising
calculation means (50) for calculating a total value of smoke generation amount by summing smoke generation amounts obtained since a previous execution of the addition of the additive through the addition valve (46),
wherein the forced fuel addition means (50) forcedly performs the addition of the additive through the addition valve (46) when the total value of smoke generation amount calculated by the calculation means (50) exceeds a predetermined value (α).

2. The exhaust emission control apparatus according to claim 1, wherein the predicting means (50) predicts the state where the large amount of smoke is generated when the internal combustion engine (10) is in an acceleration state.

3. The exhaust emission control apparatus according to claim 1 or 2, wherein the predicting means (50) predicts the state where the large amount of smoke is generated when a combustion mode in the internal combustion engine (10) is changed.

4. The exhaust emission control apparatus according to any one of claims 1 to 3, wherein the additive comprises a fuel employed in the internal combustion engine (10).

5. An exhaust emission control method for an internal combustion engine (10) having an exhaust passage (14) and an addition valve (46) for injecting an additive and adding it to an exhaust gas, the addition valve (46) having an injection hole (60) communicated with the exhaust passage (14),
the exhaust emission control method comprising the steps of
predicting a state where a large amount of smoke is generated in the exhaust gas on the basis of an operation state of the internal combustion engine; and
forcedly performing addition of the additive to the exhaust gas through the addition valve (46) when the state where the large amount of smoke is generated is predicted,
the exhaust emission control method being **characterized by** further comprising the steps of
calculating a total value of smoke generation amount by summing smoke generation amounts obtained since a previous execution of the addition of the additive through the addition valve (46), and
forcedly performing the addition of the additive through the addition valve (46) when the calculated total value of smoke generation amount exceeds a predetermined value (α).

6. The exhaust emission control method according to claim 5, wherein the state where the large amount of smoke is generated is predicted when the internal combustion engine (10) is in an acceleration state.

7. The exhaust emission control method according to claim 5 or 6, wherein the state where the large amount of smoke is generated is predicted when a combustion mode in the internal combustion engine (10) is changed.

8. The exhaust emission control method according to any one of claims 5 to 7, **characterized in that** the additive comprises a fuel employed in the internal combustion engine (10).

## Patentansprüche

1. Abgasemissionssteuergerät für eine Brennkraftmaschine (10) mit einem Abgasdurchgang (14) und einem Zugabeventil (46) zum Einspritzen eines Additivs und Zugeben des Additivs zu einem Abgas, wobei das Zugabeventil (46) ein Einspritzloch (60) aufweist, das mit dem Abgasdurchgang (14) in Verbindung steht,
wobei das Abgasemissionssteuergerät Folgendes aufweist:
eine Voraussageeinrichtung (50), die einen Zustand, in dem eine große Menge von Rauch in dem Abgas erzeugt wird, basierend auf einem Betriebszustand der Brennkraftmaschine (10) voraussagt; und eine Zwangskraftstoffzugabeeinrichtung (50), die gezwungen eine Zugabe des Additivs zu dem Abgas durch das Zugabeventil (46) durchführt, wenn die Voraussageeinrichtung (50) den Zustand voraussagt, in dem die große Menge von Rauch erzeugt wird,
wobei das Abgasemissionssteuergerät **dadurch gekennzeichnet ist, dass** es ferner Folgendes aufweist:
eine Berechnungseinrichtung (50) zum Berechnen eines Gesamtwerts einer Raucherzeugungsmenge durch Summieren von Raucherzeugungsmengen, die seit einer vorhergehenden Durchführung der Zugabe des Additivs durch das Zugabeventil (46) erhalten wurden,
wobei die Zwangskraftstoffzugabeeinrichtung (50) die Zugabe des Additivs durch das Zugabeventil (46) gezwungen durchführt, wenn der Gesamtwert einer durch die Berechnungseinrichtung (50) berechneten Raucherzeugungsmenge einen vorbestimmten Wert (α) übersteigt.

2. Abgasemissionssteuergerät nach Anspruch 1, wobei die Voraussageeinrichtung (50) den Zustand voraussagt, in dem die Große Menge von Rauch erzeugt wird, wenn sich die Brennkraftmaschine (10) in einem Beschleunigungszustand befindet.

3. Abgasemissionssteuergerät nach Anspruch 1 oder 2, wobei die Voraussageeinrichtung (50) den Zustand voraussagt, in dem die große Menge von Rauch erzeugt wird, wenn eine Verbrennungsweise in der Brennkraftmaschine (10) verändert wird.

4. Abgasemissionssteuergerät nach einem der Ansprüche 1 bis 3, wobei das Additiv einen Kraftstoff enthält, der in der Brennkraftmaschine (10) verwendet wird.

5. Abgasemissionssteuerverfahren für eine Brennkraftmaschine (10) mit einem Abgasdurchgang (14) und einem Zugabeventil (46) zum Einspritzen eines Additivs und Zugeben des Additivs zu einem Abgas, wobei das Zugabeventil (46) ein Einspritzloch (60) aufweist, das mit dem Abgasdurchgang (14) in Verbindung steht,
wobei das Abgasemissionssteuerverfahren die folgenden Schritte aufweist:
Voraussagen eines Zustands, in dem eine große Menge von Rauch in dem Abgas erzeugt wird, basierend auf einem Betriebszustand der Brennkraftmaschine; und
gezwungenes Durchführen einer Zugabe des Additivs zu dem Abgas durch das Zugabeventil (46), wenn der Zustand vorausgesagt wird, in dem die große Menge von Rauch erzeugt wird,
wobei das Abgasemissionsteuerverfahren **dadurch gekennzeichnet ist, dass** es ferner die folgenden Schritte aufweist:
Berechnen eines Gesamtwerts einer Raucherzeugungsmenge durch Summieren von Raucherzeugungsmengen, die seit einer vorhergehenden Durchführung der Zugabe des Additivs durch das Zugabeventil (46) erhalten wurden, und
gezwungenes Durchführen der Zugabe des Additivs durch das Zugabeventil (46), wenn der berechnete Gesamtwert der Raucherzeugungsmenge einen vorbestimmten Wert (α) übersteigt.

6. Abgasemissionssteuerverfahren nach Anspruch 5, wobei der Zustand, in dem die große Menge von Rauch erzeugt wird, vorausgesagt wird, wenn sich die Brennkraftmaschine (10) in einem Beschleunigungszustand befindet.

7. Abgasemissionssteuerverfahren nach Anspruch 5 oder 6, wobei der Zustand vorausgesagt wird, in dem die große Menge von Rauch erzeugt wird, wenn eine Verbrennungsweise in der Brennkraftmaschine (10) verändert wird.

8. Abgasemissionssteuerverfahren nach einem der Ansprüche 5 bis 7, **dadurch gekennzeichnet, dass** das Additiv einen Kraftstoff enthält, der in der Brennkraftmaschine (10) verwendet wird.

## Revendications

1. Appareil de commande des émissions d'échappement pour un moteur à combustion interne (10) comportant un passage d'échappement (14) et une soupape d'ajout (46) destinée à injecter un additif et à l'ajouter aux gaz d'échappement, la soupape d'ajout (46) comportant un trou d'injection (60) en communication avec le passage d'échappement (14),
l'appareil de commande des émissions d'échappement comprenant
un moyen de prédiction (50) qui prédit un état dans lequel une grande quantité de fumée est générée dans les gaz d'échappement sur la base d'un état de fonctionnement du moteur à combustion interne (10) ; et
un moyen d'ajout de carburant de force (50) qui exécute de force l'ajout de l'additif vers les gaz d'échappement par l'intermédiaire de la soupape d'ajout (46) lorsque le moyen de prédiction (50) prédit l'état dans lequel la grande quantité de fumée est générée,
l'appareil de commande des émissions d'échappement étant **caractérisé en ce qu'**il comprend de plus
un moyen de calcul (50) destiné à calculer une valeur totale de quantités de génération de fumée en additionnant les quantités de génération de fumée obtenues depuis une exécution précédente de l'ajout de l'additif par l'intermédiaire de la soupape d'ajout (46),
dans lequel le moyen d'ajout de carburant de force (50) exécute de force l'ajout de l'additif par l'intermédiaire de la soupape d'ajout (46) lorsque la valeur totale des quantités de génération de fumée calculée par le moyen de calcul (50) dépasse une valeur prédéterminée (α).

2. Appareil de commande des émissions d'échappement selon la revendication 1, dans lequel le moyen de prédiction (50) prédit l'état dans lequel la grande quantité de fumée est générée lorsque le moteur à combustion interne (10) se trouve dans un état d'accélération.

3. Appareil de commande des émissions d'échappement selon la revendication 1 ou 2, dans lequel le moyen de prédiction (50) prédit l'état dans lequel la grande quantité de fumée est générée lorsqu'un mode de combustion dans le moteur à combustion interne (10) est changé.

4. Appareil de commande des émissions d'échappement selon l'une quelconque des revendications 1 à 3, dans lequel l'additif comprend un carburant utilisé dans le moteur à combustion interne (10).

5. Procédé de commande des émissions d'échappement pour un moteur à combustion interne (10) comportant un passage d'échappement (14) et une soupape d'ajout (46) destinée à injecter un additif et à l'ajouter aux gaz d'échappement, la soupape d'ajout (46) comportant un trou d'injection (60) en communication avec le passage d'échappement (14),
le procédé de commande des émissions d'échappement comprenant les étapes consistant à
prédire un état dans lequel une grande quantité de fumée est générée dans les gaz d'échappement sur la base d'un état de fonctionnement du moteur à combustion interne ; et
exécuter de force de l'ajout de l'additif vers les gaz d'échappement par l'intermédiaire de la soupape d'ajout (46) lorsque l'état dans lequel la grande quantité de fumée est générée est prédit,
le procédé de commande des émissions d'échappement étant **caractérisé en ce qu'**il comprend de plus les étapes consistant à
calculer une valeur totale de quantité de génération de fumée en additionnant les quantités de génération de fumée obtenues depuis une exécution précédente de l'ajout de l'additif par l'intermédiaire de la soupape d'ajout (46), et
exécuter de force l'ajout de l'additif par l'intermédiaire de la soupape d'ajout (46) lorsque la valeur totale calculée de quantités de génération de fumée dépasse une valeur prédéterminée (α).

6. Procédé de commande des émissions d'échappement selon la revendication 5, dans lequel l'état dans lequel la grande quantité de fumée est générée est prédit lorsque le moteur à combustion interne (10) se trouve dans un état d'accélération.

7. Procédé de commande des émissions d'échappement selon la revendication 5 ou 6, dans lequel l'état dans lequel la grande quantité de fumée est générée est prédit lorsqu'un mode de combustion dans le moteur à combustion interne (10) est changé.

8. Procédé de commande des émissions d'échappement selon l'une quelconque des revendications 5 à 7, **caractérisé en ce que** l'additif comprend un carburant utilisé dans le moteur à combustion interne (10).
